# EUROPEAN PATENT APPLICATION

(11) **EP 1 947 815 A1**
(43) Date of publication of application: **23.07.2008**
(21) Application number: 08150271.8
(22) Date of filing: 15.01.2008
(51) Int. Cl.: H04L 12/58, H04M 1/725, G06Q 10/00

(54) **Apparatus and method for message transmission**

(30) Priority: 19.01.2007 KR 20070005928
(71) Applicant: Samsung Electronics Co., Ltd., Suwon-si, Gyeonggi-Do (KR)
(72) Inventor: Kim, Ji-Young, Gyeonggi-do (KR); Lee, Sung-Yeon, Gyeonggi-do (KR); Kim, Jae-Wook, Gyeonggi-do (KR)
(74) Representative: Grünecker, Kinkeldey, Stockmair & Schwanhäusser Anwaltssozietät

(57) **Abstract**

Provided is an apparatus and method for message transmission. The method includes receiving a selection of an acquirement object and information, the information including the acquirement object, and when the acquirement object is a recipient, extracting a recipient list from the information, inputting the recipient list to a "Recipient" item of a message to be transmitted, and filling a remaining item of the message and transmitting the message.

## Description

The present invention relates generally to message transmission, and in particular, to an apparatus and method for extracting all recipient and message content from a stored message and utilizing the extracted recipient and message content for message transmission by the improvement of a conventional message transmission technology, in which a user can extract only one of "Recipient" and "Message Content" items from a stored message and hence, personally has to complete a remaining item after extraction.

The generalization of Internet use has led to the generalization of a messaging function such as electronic mail (e-mail). A method for accessing a message composer composing and transmitting a message is various as shown in Table 1 below.

**Table 1**

| Step No. | Action |
|---|---|
| 1 | Create New Message in Messaging Function |
| 2 | Select User and Group in Contact Function, and Send Message |
| 3 | Select one Item in Call Log Function, and Send Message |
| 4 | Select one Item in Template Function, and Send Message |
| 5 | Forward Received Message |
| 6 | Reply, Reply to All |

Messages are completed by inputting recipients and message contents. Recipients can be input in a direct phone-number input method, a recently used contact log method, and a contact list method. Message contents can be input in direct content input and template input methods.

As the message composer is accessed via several paths as above, the message composer can be initiated in a state where a specific item (e.g., a message text, a recipient list) is already input along the access path. In other words, the message composer can be initiated after the specific item is input as in Table 2 below.

**Table 2**

| Access Method | Recipient List | Content |
|---|---|---|
| New Message | Not Initiated | Not Initiated |
| By Contact | Contact Address of Group/Recipient Specified by Contact | Not Initiated |
| By Call Log | Contact Address of Group/Recipient Specified by Call Log | Not Initiated |
| By Template | Not Initiated | Content of Specified Template |
| Forward | Not Initiated | Content of Received Message |
| Reply | Sender of Received Message | Not |
| Reply to All | Sender and Recipient of Received Message | Not |

Regarding the item of Table 2 not input along the path, a user has to personally input the item in the above input method. Even the modification of the input item (e.g., modification of a recipient or modification of a message content) can use the above input method.

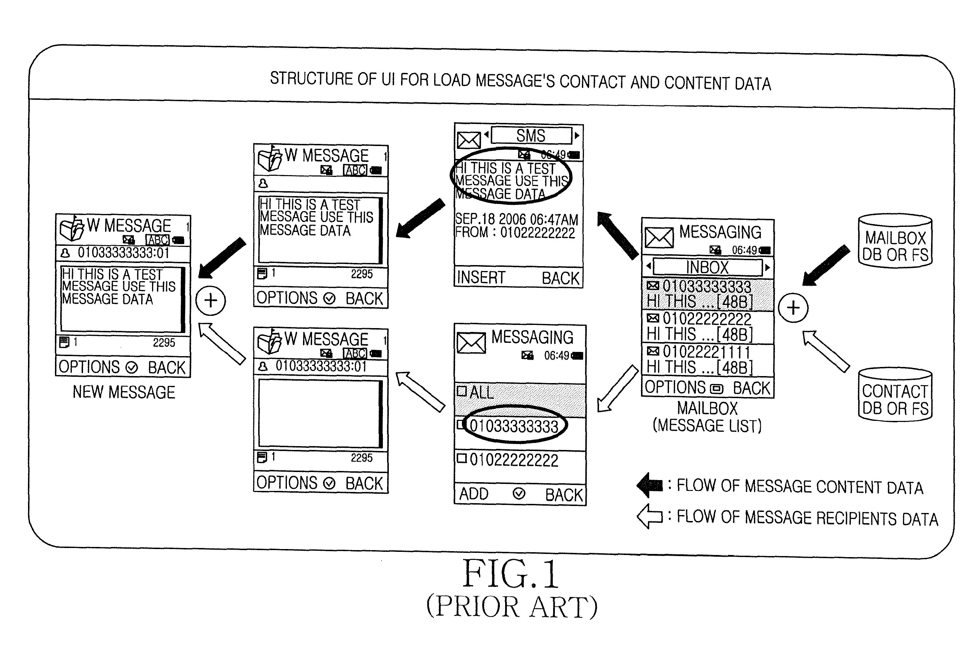

FIG. 1 is a diagram illustrating a conventional procedure of selecting a recipient and a message content upon message transmission.

Referring to FIG. 1, a procedure of loading necessary recipient information and message content from a database and composing a message using a message composer is shown.

However, as data utilizable for the above operation, only one of recipient information and a message content can be utilized. In other words, either data must be newly created or a recipient list must be newly specified to transmit any data to a recipient group desired by a user.

Undoubtedly, a message content can be easily composed using a template in a composition process, but it is inconvenient to store and use all message contents by templates.

Similarly, in terms of convenience, it is also difficult that in a case where a user transmits a few messages to specific recipients, a recipient group is reconstructed for only a current message or a recipient list is made each time the user transmits a message to the specific recipients.

The present invention has been designed to substantially solve at least the above problems and/or disadvantages and to provide at least the advantages below. Accordingly, the object of the present invention is to provide an apparatus and method for a message transmission.

This object is solved by the subject matter of the independent claims.

Preferred embodiments are defined in the dependent claims.

An aspect of the present invention is to provide an apparatus and method for, upon a message transmission, extracting recipient information and a message content from previously stored data and utilizing the extracted recipient information and message content for a new message composition.

A further aspect of the present invention is to provide an apparatus and method for, upon message forwarding, extracting recipient information and a message content from previously stored data and utilizing the extracted recipient information and message content for a new message composition.

According to one aspect of the present invention, there is provided a method for a message transmission. The method includes receiving a selection of an acquirement object and information which including the acquirement object; when the acquirement object is a recipient, extracting a recipient list from the information; inputting the recipient list to a "Recipient" item of a message to be transmitted; and filling a remaining item of the message and transmitting the message.

According to another aspect of the present invention, there is provided an apparatus for message transmission. The apparatus includes a controller for receiving a selection of an acquirement object and information which including the acquirement object, when the acquirement object is a recipient, extracting a recipient list from the information, inputting the recipient list to a "Recipient" item of a message to be transmitted, filling a remaining item of the message, and transmitting the message.

The above object and other aspects, features and advantages of the present invention will become more apparent from the following detailed description when taken in conjunction with the accompanying drawings in which:
FIG. 1 is a diagram illustrating a conventional procedure of selecting a recipient and a message content upon message transmission;
FIG. 2 is a diagram illustrating a procedure of extracting a message content upon message transmission according to an exemplary embodiment of the present invention;
FIG. 3 is a flowchart illustrating a procedure of extracting a message content upon message transmission according to an exemplary embodiment of the present invention;
FIG. 4 is a diagram illustrating a procedure of extracting a recipient upon message transmission according to an exemplary embodiment of the present invention;
FIG. 5 is a flowchart illustrating a procedure of extracting a recipient upon message transmission according to an exemplary embodiment of the present invention; and
FIG. 6 is a block diagram illustrating an apparatus for message transmission according to an exemplary embodiment of the present invention.

Preferred embodiments of the present invention will be described herein below with reference to the accompanying drawings. In the following description, well-known functions or constructions are not described in detail since they would obscure the invention in unnecessary detail.

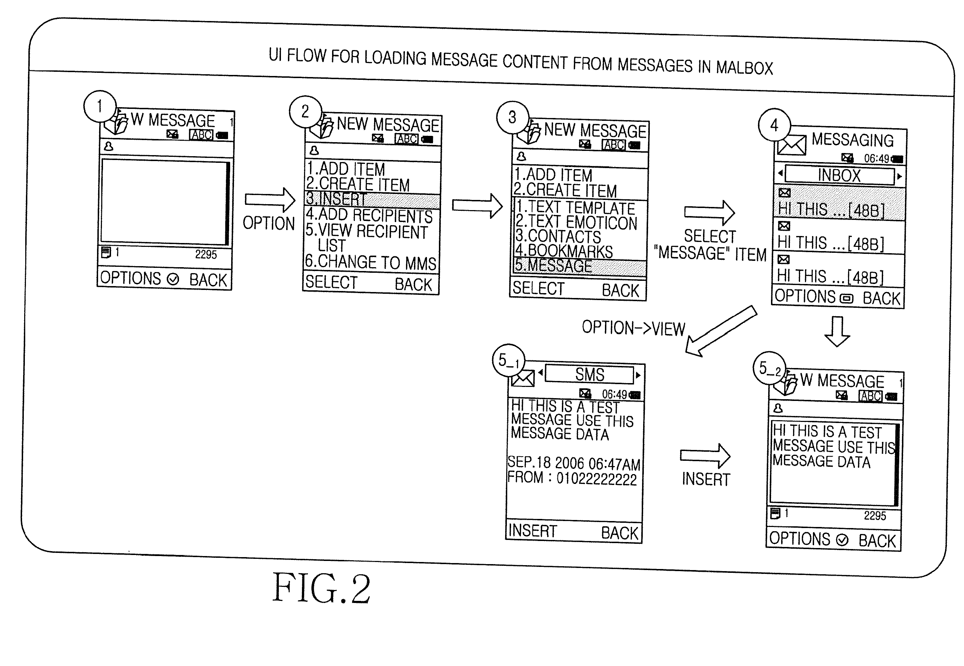

FIG. 2 is a diagram illustrating a procedure of extracting a message content upon message transmission according to an exemplary embodiment of the present invention.

Referring to FIG. 2, the procedure loads a message content from a given mailbox at the time of message composition.

When a user intends to add a content of a message that has been previously received or transmitted, in FIG. 2, step 2, on a message composition screen, in FIG. 2, step 1, the user can select "Option", "Insert", and "Message" items in sequence, in FIG. 2, step 3, select a given message from a mailbox, in FIG. 2, step 4, and load its content, in FIG. 2, step 5-1. Next, the user inserts the loaded content into a message to be composed, in FIG. 2, step 5-2. The user can edit the inserted content of the message. After transmitting the message, the user can again transmit the message to another recipient using a message load from the mailbox.

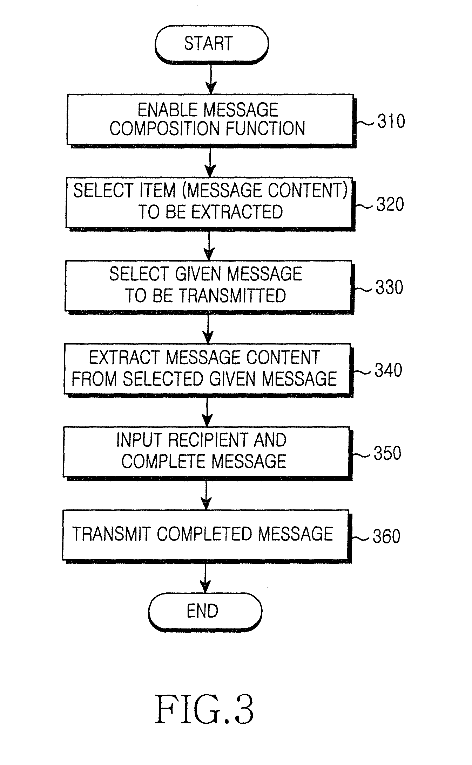

FIG. 3 is a flowchart illustrating a procedure of extracting a message content upon a message transmission according to an exemplary embodiment of the present invention.

Referring to FIG. 3, when a user composes a message, the user enables a message composition function in a used apparatus in Step 310.

The apparatus receives, from the user, a selection of an item to be extracted in Step 320. In this case, a message content is extracted from a given message. Objects from which a message content can be extracted are diverse, including a message, as shown in FIG. 2.

The apparatus receives a selection of a given message including a message content to be transmitted among previously stored given messages in Step 330.

The apparatus extracts the message content from the selected given message in Step 340.

The user inputs a "Recipient" item and completes the message composition in Step 350, and transmits a completed message in Step 360.

After Step 360, the procedure is terminated.

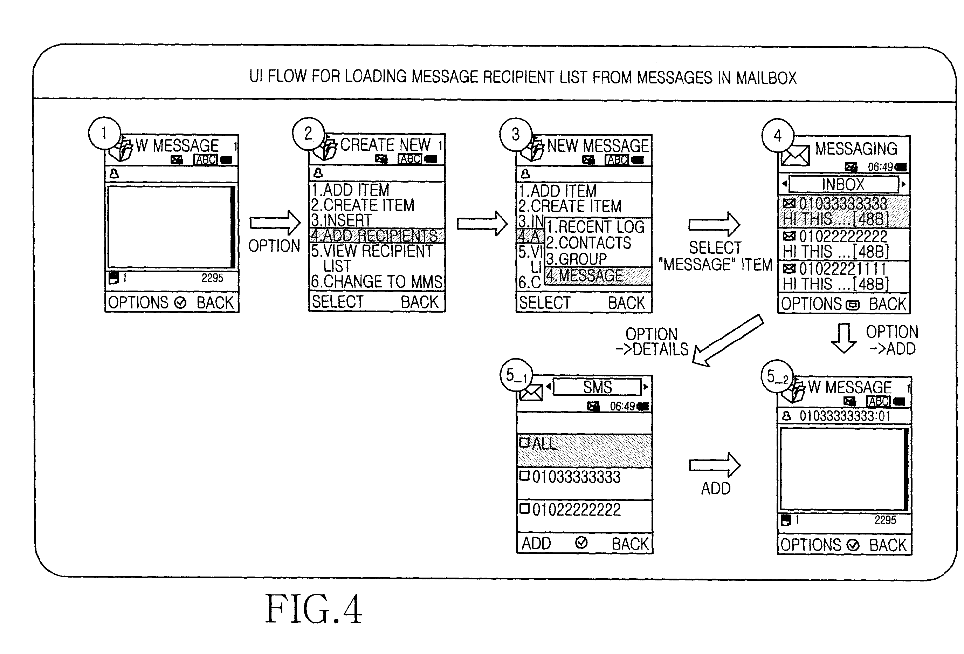

FIG. 4 is a diagram illustrating a procedure of extracting a recipient upon a message transmission according to an exemplary embodiment of the present invention.

Referring to FIG. 4, the procedure loads recipient information from a given mailbox at the time of message composition.

When a user intends to add recipients of a message that has been previously received or transmitted, in FIG. 4, step 2, on a message composition screen, in FIG. 4, step 1, the user can select "Option", "Add recipients", and "Message" items in sequence, in FIG. 4, step 3, select a given message from a mail box, in FIG. 4, step 4, and load a recipient, in FIG. 4, step 5-1. Next, the user inserts the loaded recipient into a message to be composed. The user can add, in whole or in part, recipients or a recipients group specified for the message to a "Recipient" item.

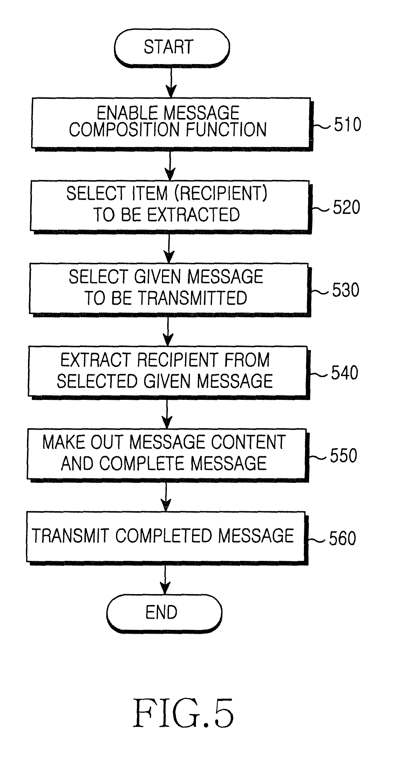

FIG. 5 is a flowchart illustrating a procedure of extracting a recipient upon a message transmission according to an exemplary embodiment of the present invention.

Referring to FIG. 5, when a user composes a message, the user enables a message composition function in a used apparatus in Step 510.

The apparatus receives a selection of an item to be extracted from the user in Step 520. In this case, a recipient is extracted from a given message. Objects from which a recipient can be extracted are diverse, including a message, as shown in FIG. 4.

The apparatus receives a selection of given messages, including a recipient to be transmitted, among previously stored given messages in Step 530.

The apparatus extracts the recipient from the selected given message in Step 540.

The apparatus composes a message content and completes a message composition in Step 550, and transmits a completed message in Step 560.

After Step 560, the algorithm procedure is terminated.

Operation of FIGs. 3 and 5 can be applied together. In other words, a recipient item and a message content can be extracted from a given message when a new message is created.

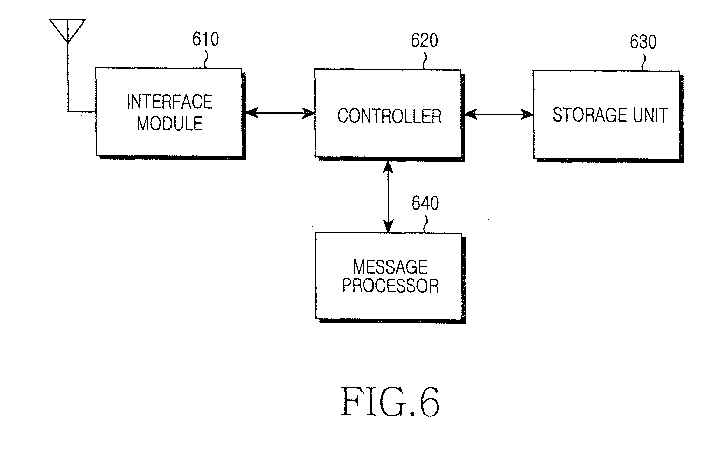

FIG. 6 is a block diagram illustrating an apparatus for a message transmission according to an exemplary embodiment of the present invention.

Referring to FIG. 6, the apparatus includes an interface module 610, a controller 620, a storage unit 630, and a message processor 640.

The interface module 610, a module for communicating with another node, includes a wired processing module, a wireless processing module, and a baseband-processing module. The wireless processing module converts a signal received through an antenna into a baseband signal and provides the converted baseband signal to the baseband-processing module. Alternately, the wireless processing module converts a baseband signal from the baseband-processing module into a Radio Frequency (RF) signal for real transmission through the air and transmits the RF signal via the antenna. The wired processing module converts a signal received through a wired path into a baseband signal and provides the baseband signal to the baseband-processing module. Alternately, the wired processing module converts a baseband signal from the baseband-processing module into a wired signal for real transmission through a wire and transmits the wired signal via a wired path connected.

The controller 620 performs basic processing and control of the apparatus. For example, the controller 620 performs processing and control for data communication and, in addition to a general function, controls the message processor 640 to extract a recipient and a message content from a given stored message or other information according to the present invention.

The storage unit 630 stores programs for controlling a general operation of the apparatus and temporary data generated in execution of the program. In particular, the storage unit 630 stores messages according to the present invention.

The message processor 640 loads specific message or data from the storage unit 630 by the control of the controller 620 and provided information, extracts a recipient or a message content, and utilizes the extracted recipient or message content for message composition.

The controller 620 can also perform a function of the message processor 640. In the present invention, these are separately constructed and shown to distinguish and describe respective functions. Thus, when a product is realized in practice, the product can be constructed for the controller 620 to process either all or only part of the respective functions.

In the present invention, when a user desires to share information with another user by a message, the user can extract a recipient or a message content from a stored message or other information, thereby facilitating message composition. Thus, the present invention has an advantage of sharing information more easily.

Alternate embodiments of the present invention can also comprise computer readable codes on a computer readable medium. The computer readable medium includes any data storage device that can store data that can be read by a computer system. Examples of a computer readable medium include magnetic storage media (such as ROM, floppy disks, and hard disks, among others), optical recording media (such as CD-ROMs or DVDs), and storage mechanisms such as carrier waves (such as transmission through the Internet). The computer readable medium can also be distributed over network coupled computer systems so that the computer readable code is stored and executed in a distributed fashion. Also, functional programs, codes, and code segments for accomplishing the present invention can be construed by programmers of ordinary skill in the art to which the present invention pertains.

While the invention has been shown and described with reference to certain preferred embodiments thereof, it will be understood by those skilled in the art that various changes in form and details may be made therein without departing from the scope of the invention as defined by the appended claims.

## Claims

1. A method for message transmission, comprising:
receiving a selection of an acquirement object and information which including the acquirement object;
when the acquirement object is a recipient, extracting a recipient list from the information;
inputting the recipient list to a recipient item of a message to be transmitted; and
filling a remaining item of the message and transmitting the message.

2. The method of claim 1, wherein when the acquirement object is a message content, the method further comprises:
extracting a message content from the information;
inputting the message content to a content item of a message to be transmitted; and
filling a remaining item of the message and transmitting the message.

3. An apparatus for message transmission, comprising:
means for receiving a selection of an acquirement object and information which including the acquirement object, and when the acquirement object is a recipient, extracting a recipient list from the information, inputting the recipient list to a recipient item of a message to be transmitted, filling a remaining item of the message, and transmitting the message.

4. The apparatus of claim 3, wherein when the acquirement object is a message content, the means is adapted to extract the message content from the information, to input the message content to a content item of a message to be transmitted, to fill a remaining item of the message, and to transmit the message.

5. The apparatus of claim 3, wherein the means is further adapted to extract one of a message content and a recipient list from the information depending on a user's selection.

6. A computer-readable recording medium having recorded thereon a program for message transmission, comprising;
a first code segment for receiving a selection of an acquirement object and information which including the acquirement object;
a second code segment for extracting a recipient list from the information, when the acquirement object is a recipient;
a third code segment for inputting the recipient list to a recipient item of a message to be transmitted; and
a fourth code segment for filling a remaining item of the message and transmitting the message.

7. The computer-readable recording medium of claim 6, when the acquirement object is a message content, the computer-readable recording medium further comprises:
a fifth code segment for extracting a message content from the information;
a sixth code segment for inputting the message content to a content item of a message to be transmitted; and
a seventh code segment for filling a remaining item of the message and transmitting the message.
